Europäisches Patentamt

European Patent Office

Office européen des brevets

(11) Veröffentlichungsnummer: **0 054 162**
**B1**

(12) # EUROPÄISCHE PATENTSCHRIFT

(45) Veröffentlichungstag der Patentschrift:
18.07.84

(21) Anmeldenummer: 81109120.6

(22) Anmeldetag: 28.10.81

(51) Int. Cl.³: **A 22 C 13/00**

(54) **Schlauchhülle, insbesondere Wursthülle, mit wasserdampfundurchlässiger Schicht, Verfahren zu ihrer Herstellung und ihre Verwendung.**

(30) Priorität: 29.11.80 DE 3045086

(43) Veröffentlichungstag der Anmeldung:
23.06.82 Patentblatt 82/25

(45) Bekanntmachung des Hinweises auf die Patenterteilung:
18.07.84 Patentblatt 84/29

(84) Benannte Vertragsstaaten:
AT BE CH DE FR GB IT LI LU NL SE

(56) Entgegenhaltungen:
EP - A - 0 008 646
EP - A - 0 014 346
US - A - 2 773 773

(73) Patentinhaber: **HOECHST AKTIENGESELLSCHAFT,**
**Postfach 80 03 20, D-6230 Frankfurt am Main 80 (DE)**

(72) Erfinder: **Porrmann, Herbert, Dr., Imkerweg 10,**
**D-6272 Niedernhausen (DE)**
Erfinder: **Seifried, Walter, Dr., Am Güldenplan 9,**
**D-6200 Wiesbaden (DE)**
Erfinder: **Klenk, Ludwig, Jungferweg 20, D-6227 Oestrich**
**Winkel III (DE)**
Erfinder: **Stenger, Karl, Theodor-Heuss-Strasse 27,**
**D-6220 Rüdesheim (DE)**

BUNDESDRUCKEREI BERLIN

**Beschreibung**

Die Erfindung bezieht sich auf eine Schlauchhülle von der im Oberbegriff des Anspruchs 1 genannten Art, auf ein Verfahren zu ihrer Herstellung und ihrer Verwendung als Wursthülle für Koch- und Brühwürste, insbesondere Würste vom Leberwursttyp.

Schlauchhüllen aus einer Bahn, beispielsweise aus regenerierter Cellulose, die durch längsaxiales Falten und Verkleben der sich überlappenden längsaxial sich erstreckenden Randzonen hergestellt sind, sind bereits bekannt (US-A-2 148 884, US-A-2 226 442, US-A-2 685 769, US-A-2 685 770, US-A-2 757 495, US-A-2 773 773). Bei den bisher beschriebenen Verklebungen handelt es sich entweder um die Anwendung von Lösungsmitteln, mit denen die Oberfläche der Bahn angelöst und klebrig gemacht wird, wobei ein »Klebstoff« in situ auf der Bahnoberfläche erzeugt wird, oder um Bahnen, die mit einem thermoplastischen Harz überzogen sind, oder aus einem thermoplastischen Material bestehen, das bei Anwendung von Wärme und Druck siegelfähig ist.

So beschreibt die US-A-2 653 432 ein Verfahren zum Verbinden der überlappenden Ränder eines Films, der beispielsweise auch aus regenerierter Cellulose bestehen kann und gegebenenfalls eine Faserverstärkung aufweist, mit einem Streifen aus thermoplastischem Material, der zwischen den sich überlappenden Rändern angeordnet ist und der beim Erhitzen klebrig wird. Als Beispiel für dieses thermoplastische Material wird u. a. Polyvinylidenchlorid genannt. Diese bekannte Schlauchhülle kann auch einen feuchtigkeitsdichten Überzug auf der Außenseite aufweisen, wobei dann die überlappenden Ränder frei von dem Überzug und die restliche Oberfläche frei von thermoplastischem Material gehalten wird. Das Hüllenmaterial kann vorgestreckt sein, vorzugsweise in Längsrichtung.

Dieses bekannte, etwa 30 Jahre alte Verfahren, wird kaum mehr ausgeübt; insbesondere ist eine Überlappungsnaht gebildet durch Versiegeln der übereinanderliegenden Randzonen, nicht ausreichend fest und auch aus optischen Gründen völlig unbefriedigend. Wursthüllen werden inzwischen ausschließlich aus nahtlosem Material hergestellt, obwohl bei diesen nahtlosen Schläuchen einige Nachteile akzeptiert werden müssen.

Nahtlose Schläuche aus faserverstärkter regenerierter Cellulose werden üblicherweise nach folgenden wesentlichen Verfahrensschritten hergestellt. Eine Faservliesbahn wird zu einem Schlauch geformt, dessen Ränder sich überlappen und mit Viskose verklebt werden. Nach ein- oder beidseitiger Beschichtung mit Viskose aus Ringschlitzdüsen wird der Schlauch koaguliert, zu Cellulosehydrat-Gel regeneriert und getrocknet. Während dieses Prozesses wird der Schlauch durch das bei der Koagulation und Regenerierung entstehende Gasgemisch und während des Trocknens durch ein eingebrachtes eingeschlossenes Luftvolumen abgestützt und gegebenenfalls zur Verbesserung der mechanischen Eigenschaften in Längs- und Querrichtung gestreckt.

Nachteiligerweise treten beispielsweise an den Kanten des flachgelegten Gelschlauchs längsaxial im Kantenbereich sich erstreckende Schwächungszonen, sogenannte Spinnkanten, auf. Ferner zeigt auch das Streckverfahren Nachteile.

Sowohl der Innendruck der Prozeßgase als auch der Innendruck beim Trocknen kann nicht präzise genug gesteuert werden, so daß der Durchmesser der Schläuche innerhalb enger Grenzen nicht konstant gehalten werden kann. Ferner ist es von Nachteil, daß beim Strecken von Schläuchen mit einem Spreizgas das Verhältnis der in tangentialer und radialer Richtung wirksamen Streckkräfte festgelegt ist, so daß der nahtlose Schlauch auch aus diesem Grund bezüglich seiner mechanischen Eigenschaften, insbesondere bezüglich der Schrumpfeigenschaften und der Festigkeit in Längs- und Querrichtung festgelegt ist.

Die für die Verwendung des Schlauches als Wursthülle für Koch- und Brühwürste erforderliche Innenbeschichtung aus z. B. wasser- und wasserdampfundurchlässigem Material wird in das Innere des nahtlosen Schlauchs in Lösung oder Dispersion eingebracht, was verfahrenstechnisch aufwendig ist und mit Störungen verbunden sein kann. Das Lösungs- oder Dispersionsmittel muß z. B. in einer zeitaufwendigen Prozeßstufe durch die Schlauchwand nach außen hindurchdiffundieren. Ferner ist die Filmbildung auf der inneren Oberfläche des Schlauches nur schwer kontrollierbar. Schließlich werden durch den Beschichtungsprozeß häufig die während der Schlauchherstellung mit hohem Aufwand eingestellten mechanischen Eigenschaften nachteilig verändert. Da die Schläuche unmittelbar nach der Beschichtung flachgelegt werden müssen, besteht erhebliche Gefahr, daß die wasserdampfdichte Überzugsschicht im Bereich der Quetschkante verletzt oder geschwächt wird. Diese Beschichtungsfehler führen dazu, daß das Füllgut durch Wasserverlust oder Sauerstoffzutritt verdirbt oder unansehnlich wird.

Ausgehend von diesem Stand der Technik ist es deshalb Aufgabe der Erfindung, eine faserverstärkte Schlauchhülle aus regenerierter Cellulose vorzuschlagen, die diese Nachteile der nahtlosen Schlauchhülle nicht aufweist, die vielmehr optimale mechanische Eigenschaften, insbesondere Schrumpf- und Festigkeitswerte, besitzt und die sich außerdem auf einfache Weise mit einem sauerstoff-, wasser- und wasserdampfdichten Überzug versehen läßt, ohne daß die mechanischen Eigenschaften sich im wesentlichen verändern.

Eine weitere Aufgabe der vorliegenden Erfindung besteht darin, eine Schlauchhülle aus regenerierter Cellulose vorzuschlagen, die eine Faserverstärkung aufweist und die auf einfachere Weise aus einer Bahn hergestellt werden kann. Ferner soll das Problem, daß ein wasserdichter Überzug auf der Innenseite der Schlauchhülle mit der Klebstoffschicht im Nahtbereich in unerwünschte Wechselwirkung tritt, gelöst werden. Die Aufgabe der Erfindung besteht somit auch darin, eine insbesondere für die Verwendung als Wursthülle für Koch- und Brühwürste geeignete Schlauchhülle mit Innenbeschichtung aus sauerstoff- und wasserdampfundurchlässigem Material zu finden, bei der der Auftrag der Beschichtung vorteilhafterweise vor der Schlauchformung erfolgen kann, ohne daß die Festigkeit der Hülle, insbesondere im Nahtbereich, negativ beeinflußt wird. Besonders die Nahtstelle muß den beim Füllen und Brühen der Hülle auftretenden Kräften sicher standhalten. Eine weitere Aufgabe der Erfindung besteht darin, eine gerade, im wesentlichen krümmungsfreie Hülle mit einer Naht zu schaffen, die auch unter Einwirkung von Wasser und beim Schrumpfen ihre krümmungsfreie Form auch im Nahtbereich beibehält, trotz der relativ großen Hüllendicke in diesem Bereich. Schließlich ist es auch Aufgabe der Erfindung, eine Öffnungshilfe vorzusehen, die ein leichteres und hygienisches Entfernen der Hülle vom Inhalt gestattet, ohne daß Schwachstellen an der Schlauchhülle vorgesehen werden müssen.

Diese Aufgabe wird gelöst durch die im Anspruch 1 angegebene Hülle sowie durch das im Anspruch 10 genannte Verfahren. Die Unteransprüche 2 bis 9 betreffen weitere Ausführungsformen der Hülle, die Unteransprüche 11 bis 13 beschreiben weitere bevorzugte Verfahrensmerkmale. Die Aufgabe wird ferner durch die im Anspruch 14 angegebene Verwendung gelöst.

Vor allem aber zeigt diese Hülle überraschenderweise den Vorteil, daß sie bei der Einwirkung von Wärme und Wasser, wie dies beispielsweise beim Brühen und anschließendem Abkühlen von Wursthüllen geschieht, ihre gerade, krümmungsfreie Form beibehält. Dies ist besonders überraschend und nicht vorhersehbar, denn es ist ansich zu erwarten, daß bei diesem Vorgang die Hülle aufgrund der verschiedenen Wandstärken im Nahtbereich einerseits und im übrigen Bereich andererseits und der daraus zu erwartenden unterschiedlichen Werte für die Festigkeit, das Wasseraufnahme- und Wasserrückhaltevermögen sich krümmt oder ungleichmäßig ausdehnt oder schrumpft und sogar zum Platzen neigt.

Entsprechend der vorliegenden Erfindung wird ein um seine Längsachse gebogener, blatt- oder bahnförmiger rechteckiger Folienzuschnitt oder eine entsprechend gebogene endlose Folienbahn zu einem Schlauch geformt und die bündig einander genäherten oder sich überlappenden Ränder mit einem Folienstreifen verbunden. Im folgenden wird der Einfachheit halber anstelle von »blatt- oder bahnförmigen Zuschnitten« und »endlosen Bahnen« nur von Bahnen gesprochen. Auf der dem Folienstreifen zugewandten Schlauchoberfläche befindet sich eine sauerstoff-, wasser- und wasserdampfundurchlässige sowie weitgehend gasdichte Schicht aus thermoplastischem Material, die gleichzeitig siegelfähig ist. Diese Schicht ist gegebenenfalls mit einer haftvermittelnden Schicht auf der Bahnoberfläche verankert.

Wird die Bahn unter Überlappung ihrer Ränder zu einem Schlauch geformt, so erfolgt eine zusätzliche Verbindung der Randbereiche im Überlappungsbereich, wenn eine haftvermittelnde Schicht verwendet wird. Die haftvermittelnde Schicht befindet sich nämlich nicht nur zwischen Bahnoberfläche und gasdichter Siegelbeschichtung, sondern dringt beim Auftragen auf die Bahnoberfläche durch die Bahn hindurch bis zur gegenüberliegenden Bahnoberfläche. Die Verbindung im Überlappungsbereich erfolgt dann zwischen der haftvermittelnden Oberflächenschicht der einen Randzone und der gasdichten siegelfähigen Oberflächenschicht der anderen Randzone.

Der Folienstreifen trägt auf seiner Oberfläche, welche mit der Schlauchoberfläche in Kontakt tritt, eine siegelfähige Beschichtung, die vorzugsweise aus dem gleichen Material besteht wie die sauerstoff-, wasser- und wasserdampfdichte sowie siegelfähige Beschichtung des Schlauchs. Der Einfachheit halber wird im folgenden nur von gasdichter Beschichtung gesprochen. Die gasdichte Beschichtung ist insbesondere ein thermoplastisches Vinylidenchlorid-Einheiten enthaltendes Copolymerisat, das gegebenenfalls mit einer haftvermittelnden Schicht auf der Trägeroberfläche verankert ist. Es hat sich als besonders vorteilhaft herausgestellt, wenn auf beiden Oberflächen des Folienstreifens eine derartige gasundurchlässige Schicht vorhanden ist.

Der Folienstreifen hat zweckmäßigerweise eine Breite von etwa 5 bis 15% des Schlauchumfangs und besteht aus dem gleichen Trägermaterial wie das Bahnmaterial, nämlich aus faserverstärkter regenerierter Cellulose mit den gleichen Festigkeitswerten in Längs- und Querrichtung.

Überraschenderweise läßt sich dieser Folienstreifen auch als Aufreißband für den mit Füllgut gefüllten Schlauch, insbesondere für Wursthüllen, die vom Inhalt ohne großen Aufwand abgezogen werden sollen, verwenden. Hierzu werden z. B. nach dem Anschneiden der Wurst rechts und links unmittelbar neben dem Folienstreifen kleine Einschnitte in die Wursthülle vorgenommen, so daß der Folienstreifen und der mit ihm versiegelte Hüllenteil eine Art Grifflasche bildet. Beim Anziehen an dieser Grifflasche reißt die Wursthülle überraschenderweise in einer glatten Reißlinie rechts und links neben dem Folienstreifen in längsaxialer Richtung ein.

Die Schlauchformung erfolgt beispielsweise entweder auf einer genügend langen Wegstrecke, so daß keine Verzerrungen und Faltenbildung erfolgt, oder durch Umlenkung über ein schulterartiges Formwerkzeug. Die beiden Seitenkanten der Bahn grenzen im wesentlichen abstandslos aneinander oder überlappen sich geringfügig. Mittels am Schlauchumfang angreifender Transportelemente wird der Schlauch über die Oberfläche eines im Schlauchinneren angeordneten Stützkörpers bewegt. Der Folienstreifen wird vor dem Nahtschluß mit seiner in Richtung zur inneren Oberfläche des Schlauches weisenden Siegelschicht so zwischen die Oberfläche des Stützkörpers und den aneinanderstoßenden Rändern der Bahn eingeführt, daß die durch die Ränder der Bahn gebildete Stoßnaht die Mittellinie des Folienstreifens bildet, wobei der Folienstreifen beide Randzonen im wesentlichen gleich breit überdeckt. Die Versiegelung erfolgt z. B. durch Kontakt mit einer auf eine bestimmte Temperatur vorgeheizten Siegelbacke. Für die Versiegelung kann jedoch jede andere Wärmequelle in Frage kommen, wie beispielsweise IR-Strahler, Hochfrequenz-Erwärmung oder Heißluft.

Häufig ist es zweckmäßig, zusätzlich Druck auf die Siegelstelle auszuüben. Bei Verwendung einer Siegelbacke ist es vorteilhaft Bahnbewegung und Druck-Temperatur-Versiegelung taktweise durchzuführen. Es ist aber auch möglich, mit einer angepreßten und geheizten Rolle kontinuierlich zu versiegeln.

Die angewandten Siegeltemperaturen und Drucke hängen weitgehend von den Stoffeigenschaften der Siegelschichten ab. Für die erfindungsgemäße Verwendung für Koch- und Brühwürste werden gasundurchlässige Siegelschichten bevorzugt, die im Temperaturbereich von 120 bis 150° C nach dem erfindungsgemäßen Verfahren Innenbandversiegelungen ergeben, die den Beanspruchungen in der Praxis standhalten.

Es ist auch möglich, die Bahn in der Weise zu einem Schlauch zu formen, daß sich die gasundurchlässige und zum Versiegeln geeignete Schicht auf der Außenseite der Schlauchhülle befindet. In diesem Fall wird der Folienstreifen auf der Außenseite der Schlauchülle aufgebracht.

Die Cellulosebahn wird insbesondere nach dem Viskoseverfahren hergestellt. Die Faserverstärkung ist ebenfalls bahnförmig, z. B. eine Papierbahn mit Fasern wie sie bei der Herstellung von Papier oder Reispapier verwendet werden. Native Fasern, wie Hanf oder Flachsfasern, ebenso wie synthetische Fasern, wie Polyamid-, Polyester- oder Polyacrylnitril-Fasern, können zur Verstärkung der Cellulosebahn verwendet werden.

Die bahnförmige Faserverstärkung ist z. B. ein textiles Gebilde wie ein adhäsiv, mechanisch oder thermisch verfestigter Faservliesstoff aus wirr oder geordnet abgelegten Spinnfasern, Filamenten oder multiplen Filamentgarnen aus nativem oder synthetischem Material, ein Gewebe, Netzwerk, Gitter, Gewirke oder dergleichen.

Die Faserbahn wird vorzugsweise beidseitig mit einer Viskoselösung behandelt, insbesondere in eine Viskoselösung getaucht oder mit einer Viskoselösung beschichtet, z. B. mit schlitzförmigen Düsen, Walzen oder durch Sprühvorrichtungen, und anschließend in regenerierte Cellulose übergeführt. Es ist auch möglich, in die Viskose 10 bis 80 Gew.-% Verstärkungsfasern einzuarbeiten, die zweckmäßigerweise eine mittlere Faserlänge von 0,05 bis 15 mm aufweisen. Die Fasern bestehen aus organischen Kunstfasern, aus Naturfasern, z. B. Baumwollfasern oder aus Fibriden (US-A-2 999 788). Die Fasern enthaltende Viskose wird dann durch eine Düse in das Koagulationsbad ausgepreßt unter Bildung einer Gelbahn.

Die Viskoselösung ist eine alkalische Lösung von Natrium-Cellulosexanthogenat und wird üblicherweise hergestellt durch Umsetzung der aus Cellulose mit Natriumhydroxidlösung erhaltenen Alkalicellulose mit Schwefelkohlenstoff im alkalischen Medium; sie enthält meist noch 4 bis 20 Gew.-% Cellulose. Nach der Reifung wird die Viskose auf die Faserbahn aufgebracht und versponnen, d. h. koaguliert. Das Spinnbad enthält beispielsweise 20 bis 80 g/l Schwefelsäure, ferner 80 bis 150 g/l Natriumsulfat und/oder 200 bis 350 g/l Ammoniumsulfat.

In weiteren Stufen wird das aus Viskose-Gel bestehende faserverstärkte bahnförmige Produkt in saurem Medium, z. B. in verdünnter (kleiner/gleich 5 Gew.-%) Schwefelsäure, zu Cellulosehydrat-Gel regeneriert, zur Entfernung von Säure und Salzen mit Wasser gewaschen, mit z. B. Natriumsulfitlösung entschwefelt, gegebenenfalls durch ein Bleichbad und schließlich durch ein Weichmacherbad mit z. B. wäßriger 5 bis 20%iger Glycerin-, Sorbit- oder Glucoselösung (FR-A-1 385 394) geführt.

Das Cellulosehydrat-Gel wird durch intensive Trocknung bei 90 bis 140° C in regenerierte Cellulose übergeführt und durch Konditionierung auf einen Wassergehalt von etwa 5 bis 15 Gew.-% eingestellt. Die faserverstärkten Cellulosehydratbahnen zeigen nach der Trocknung eine Dikke von 50 bis 200 μm entsprechend einen Flächengewicht von 50 bis 250 g/m².

Es ist erfindungswesentlich, daß die Faserbahn, insbesondere während die Viskose regeneriert wird und anschließend bis zum abschließenden Trockenprozeß, gegebenenfalls aber auch bereits während der Beschichtung mit Viskose, an den Rändern festgehalten wird, so daß ein Schrumpfen der Bahn verhindert wird. Das Festhalten der Faserbahn geschieht beispielsweise mit Nadelwalzen, Nadelbändern oder Nadelketten, die ein- oder mehrreihig ausgebildet sind. Diese ergreifen die Faserbahn an den beiden Rändern, so daß die Breite der Bahn während des gesamten Prozesses konstant gehalten wird. Die Zahl der Einstiche in den Randzonen ist möglichst gering zu halten, damit die Festigkeit der Bahn möglichst wenig verringert wird. Andererseits muß eine ausreichende Anzahl der Einstiche vorhanden sein, um eine ausreichende Schrumpfverhinderung zu gewährleisten. Auch Greifkluppenketten oder eine schnurförmige Führung aus säure- und alkalibeständigem Material, z. B. aus entsprechendem Kunststoff, können zum Festhalten der Ränder der Faserbahn eingesetzt werden. Bei der schnurförmigen Führung wird die Faserbahn an beiden Rändern mit jeweils einer Schnur festgehalten, wobei der Rand um diese Schnur gelegt und durch Kleben oder Schmelzen unter Hitzeeinwirkung oder mit einem Klebstoff befestigt ist. Diese Schnur läuft z. B. in einer Führungsschiene. Auch können sogenannte Breitzugwalzen zur Breithaltung der Bahn angewendet werden.

Ein weiterer wesentlicher Verfahrensschritt besteht darin, daß man die Bahn aus dem Cellulosehydrat-Gel während des Trockenprozesses am Schrumpfen hindert und dabei zusätzlich in Querrichtung vorzugsweise um etwa 5 bis 15, insbesondere 7 bis 12% streckt, bezogen auf die ursprüngliche Breite der Faserbahn. Sofern während der Regenerierung ein geringer Schrumpf der Bahn in Querrichtung eingetreten ist, wird das Ausmaß der Querstreckung während des Trocknens entsprechend erhöht. Vor diesem Strecken wird gegebenenfalls eine Vortrocknung durchgeführt, bei der die Hauptmenge an Wasser entfernt wird, bis die Gel-Bahn einen Wassergehalt von etwa 80 bis 150 Gew.-% aufweist.

Eine weitergehende Streckung quer zur Bahnrichtung erfolgt nicht, ebenso unterbleibt eine eigene Längserstreckungsstufe. Der während des Prozesses, insbesondere beim Koagulieren, Regenerieren und Trocknen, auftretende Schrumpf der Bahn in Längsrichtung wird aufgehoben vor allem durch die auf die Bahn in Längsrichtung ausgeübte Zugkraft, die benötigt wird, um die Bahn durch die einzelnen Behandlungsstufen durchzuziehen.

Die infolge der schrumpfverhindernden Maßnahmen und der Querverstreckung während des Trockenprozesses erreichten Festigkeitswerte der Bahn in Längs- und Querrichtung sind wesentlich für die Herstellung der Schlauchhülle mit einer Längsnaht und für den aus dem gleichen Material bestehenden Folienstreifen zur Verbindung der Randzonen der Bahn.

Die Messung der Reißfestigkeit und der Reißdehnung erfolgt mit einer elektronischen Reißmaschine nach DIN 53 455. Unter Reißfestigkeit ist die Widerstandsfähigkeit des Probekörpers gegenüber der Zugbeanspruchung im Augenblick des Reißens zu verstehen. Sie wird gemessen als Reißkraft (N), bezogen auf den Querschnitt (mm²). Die Reißdehnung ist die prozentuale Verlängerung des Probekörpers gegenüber der Ausgangslänge bei Belastung im Augenblick des Reißens und wird in Prozent angegeben. Der Probekörper hat eine Länge von 100 mm, Breite von 15 mm und Dicke von 100 bis 110 µm.

Für einen nassen, d. h. in Wasser von 40° C 30 Minuten lang gewässerten Probekörper aus dem erfindungsgemäßen Bahnmaterial liegt die Reißfestigkeit in Längsrichtung bei 15 bis 30, insbesondere 20 bis 30 N/mm² und die Reißdehnung bei 30 bis 50, insbesondere 30 bis 40%. Die Reißfestigkeit in Querrichtung ist gleich, vorzugsweise aber größer im Verhältnis zur Reißfestigkeit in Längsrichtung und zeigt Werte zwischen 15 bis 35, insbesondere von 25 bis 35 N/mm². Die Reißdehnung in Querrichtung liegt im gleichen Wertebereich wie in Längsrichtung, d. h. 30 bis 50, insbesondere 30 bis 40%.

Bei einem getrockneten Probekörper aus dem Bahnmaterial der Erfindung, der eine Restfeuchte von 8 bis 10 Gew.-% Wasser und 20 bis 24 Gew.-% Glycerin enthält, liegt die Reißfestigkeit in Längsrichtung bei 50 bis 70, insbesondere 55 bis 65 N/mm² und die Reißdehnung bei 10 bis 22, insbesondere 12 bis 15%. Die Reißfestigkeit in Querrichtung ist gleich groß, vorzugsweise aber größer im Verhältnis zur Reißfestigkeit in Längsrichtung und zeigt Werte zwischen 50 und 75, insbesondere 65 bis 75 N/mm². Die Reißdehnung des getrockneten Probekörpers liegt bei 8 bis 19, insbesondere 8 bis 12%.

Zwischen der gasdichten Beschichtung und der Schlauchhülle ist gegebenenfalls eine haftvermittelnde Schicht vorhanden, worunter Stoffe oder Stoffgemische zu verstehen sind, die vor oder gleichzeitig mit dem Auftrag der Beschichtung auf die Bahnoberfläche aufgebracht werden, um die Haftung zwischen Beschichtung und Bahnoberfläche zu verbessern. Die haftvermittelnde Schicht besteht aus einem im wesentlichen wasserunlöslichen Harz, vorzugsweise aus einem gehärteten kationischen hitzehärtbaren Harz, das im ungehärteten Zustand im wesentlichen wasserlöslich ist und durch Wärmeeinwirkung durch fortschreitende Kondensationsreaktion in wasserunlöslichen Zustand überführbar ist. Polyurethanharze, Nitrocellulose und andere, als wasserunlösliche Verankerungsmittel bekannte Polymere können ebenfalls eingesetzt werden. Die haftvermittelnde Schicht wird vorzugsweise über die gesamte Bahnbreite auf die Bahn aufgebracht, und zwar entweder vor dem Trocknen auf die bereits regenerierte Cellulosehydrat-Gelbahn oder nach dem Trocknen. Der Auftrag erfolgt bevorzugt in wäßriger Dispersion, die bis zu 25 Gew.-% des wärmehärtbaren Harzes und gegebenenfalls auch das gasdichte Beschichtungsmaterial enthält. Danach wird die überzogene Bahn auf 65 bis 125° C erhitzt, bis der Feuchtigkeitsgehalt unter 10 Gew.-% liegt. Durch das Erhitzen wird das Harz zu seiner wasserunlöslichen Form gehärtet und geht eine dauerhafte Bindung mit der Oberfläche der Bahn ein. Die Harzschicht hat ein Flächengewicht von etwa 30 bis 300 mg/m², vorzugsweise 40 bis 75 mg/m².

Als geeignete Lösungsmittel für das hitzehärtbare Harz werden niedrige aliphatische oder aromatische Kohlenwasserstoffe, niedrige Alkohole oder Ester oder Mischungen dieser Lösungsmittel eingesetzt. Vorteilhaft wird eine wäßrige Lösung oder Dispersion verwendet.

Falls für bestimmte Anwendungen gewünscht, wird zusammen mit dem hitzehärtbaren Harz ein zusätzliches wasserabstoßendes Harz wie Paraffin, Montanwachs, Carnaubawachs und/oder geeignete Verdickungsmittel, wie Celluloseäther oder Stärke, auf die Bahn aufgetragen.

Die Schlauchhülle kann auch vor, vorzugsweise aber nach Aufbringen des hitzehärtbaren Harzes und vor dem Verkleben mit Beschriftungen oder dekorativen Mustern bedruckt werden, wobei neben dem bei der Herstellung von nahtlosen Wursthüllen üblichen Druckverfahren vorteilhafterweise noch weitere Druckmöglichkeiten sich anbieten, da im vorliegenden Fall die flache Bahn vor der Schlauchformung bedruckt werden kann.

Der Überzug aus hitzehärtbarem Harz ist beispielsweise frei von Pigmenten und organischen Farben und bildet somit eine klare Schicht, durch die eine eventuelle Bedruckung gut sichtbar bleibt. Es kann aber auch ein transparenter organischer Farbstoff verwendet werden, um der Verpackungshülle eine entsprechende Farbe zu verleihen.

Neben dem hitzehärtbaren Harz enthält die Schicht auf der Schlauchhülle gegebenfalls Pigmente, einen Weichmacher für das hitzehärtbare Harz und/oder ein Härtungsmittel für das hitzehärtbare Harz. Das hitzehärtbare Harz und der Weichmacher werden in einem geeigneten flüssigen Lösungs- bzw. Dispergiermittel aufgenommen, das vorteilhafterweise bei einer Temperatur verdampft werden kann, bei der gleichzeitig zumindest eine Vorhärtung des Harzes eintreten kann.

Als Beispiele für das hitzehärtbare Harz sind zu nennen: Harnstoff-Formaldehyd-, Melamin-Formaldehyd- und Phenol-Formaldehyd-Harze. Als bevorzugter Weichmacher für diese hitzehärtbaren Harze dienen weiche, nicht-härtbare Harze vom Alkyd-Typ oder auch Dibutylphthalat, Trikresylphosphate oder Dibutylsebacat.

Als Härter für das hitzehärtbare Harz kann beispielsweise Ammoniumthiocyanat, Toluolsulfonsäure, Maleinsäure oder Milchsäure eingesetzt werden. Diese Verbindungen verhalten sich wie Katalysatoren bei der Härtung der hitzehärtbaren Harze.

Insbesondere bevorzugte hitzehärtbare Harze sind Kondensationsprodukte von Polyamidpolyaminen oder aliphatischen Polyaminen oder von Polyamiden mit bifunktionellen Halohydrinen oder deren Derivaten wie z. B. Epichlorhydrin, wie sie beispielsweise in der US-A-2 573 956 oder in den GB-A-865 727 und GB-A-908 205 beschrieben sind. Ein besonders geeignetes Harz ist beispielsweise das Reaktionsprodukt aus aliphatischem 2,6-Polyamid, Di-Äthylentriamin und Epichlorhydrin.

Als Polyamine kommen einfache Alkylendiamine in Betracht oder Polyalkylenpolyamine wie beispielsweise Diäthylentriamin, Triäthylentetramin, Tetraäthylenpentamin und die entsprechenden Polypropylenpolyamine, und Polybutylenpolyamine wie Dibutylentriamin. Die Polyamine werden zur Herstellung der entsprechenden Chlorhydrinharze mit mehr als einem Mol Epichlorhydrin je Mol Polyamin umgesetzt. Im allgemeinen werden von 1,5 bis 4,0 Mol Epichlorhydrin, meist 2 bis 3 Mol angewendet. Die Umsetzung erfolgt in wäßriger Lösung, bei mäßig erhöhter Temperatur (etwa 50° C), bis der gewünschte Viskositätsgrad erreicht ist. Vorzugsweise verwendet man Umsetzungsprodukte von Epichlorhydrin mit Dipropylentriamin oder mit Bis(3-Aminopropyl)methylamin, wobei man 2,8 bis 3,8 Mol Epichlorhydrin mit 1 Mol Polyamin umsetzt.

Die Polyamid-Polyamine sind Kondensationsprodukte einer gesättigten, aliphatischen, zweibasischen Säure, die 3 bis 8 Kohlenstoffatome im Molekül aufweist, mit einem der obengenannten Polyamine, das mindestens eine sekundäre und zwei primäre Amingruppen aufweist, wie beispielsweise die obengenannten Polyalkylenpolyamine.

Vorzugsweise werden Diglykolsäure, Bernsteinsäure, Glutarsäure und Adipinsäure als zweibasische Säure verwendet. Es können auch Gemische zweibasischer Säuren verwendet werden. Die Gemische der Säuren können auch mehr als acht Kohlenstoffatome im Molekül aufweisende Säuren enthalten, sofern deren Anteil an der Mischung nicht verhindert, daß das daraus hergestellte Polyamin-Polyamid in Wasser echt löslich oder wenigstens kolloidal löslich ist. Ein Teil der Polyamine, die mit der zweibasischen Säure umgesetzt werden, kann durch Alkylendiamine ersetzt sein. Deren Anteil kann bis zu 30% betragen. Die Umsetzung zwischen dem Polyamin und der zweibasischen Säure wird bei etwa 110 bis 250° C, meist bei etwa 160 bis 210° C, durchgeführt. Etwa 0,8 bis 1,4 Mol der Säure werden je Mol Polyamin angewendet. Die erhaltenen Polyamin-Polyamide werden in wäßriger Lösung bei etwa 50° C mit 0,5 bis 1,8 Mol Epichlorhydrin je sekundäre Aminogruppe umgesetzt, vorzugsweise verwendet man etwa 0,9 bis 1,5 Mol Epichlorhydrin.

Das Harz wird in einer wäßrigen Lösung, die etwa 0,3 bis 2,0 Gew.-%, vorzugsweise 1 bis 1,3 Gew.-% des Chlorhydrinharzes enthält, auf die für die Beschichtung vorgesehene Bahn aufgetragen, vorzugsweise auf die noch feuchte, noch nicht getrocknete Bahn aus Cellulosehydrat-Gel. Man kann die wäßrige Lösung jedoch auch auftragen, nachdem die Cellulosebahn getrocknet worden ist, was zwar den Vorteil hat, daß man Lösungen mit geringerem Gehalt an Harz zur Erzielung der gleichen Wirkung benötigt, was jedoch gelegentlich zu ungleichmäßiger Imprägnierung führt. Nach dem Auftragen der wäßrigen Lösung des Verankerungsmittels wird die Bahn bei mäßiger Wärme (etwa 100° C) getrocknet.

Die gasdichte sowie siegelfähige Beschichtung ist insbesondere ein thermoplastisches Vinylidenchlorid-Einheiten enthaltendes Copolymerisat, das gewöhnlich mit einem Flächengewicht von 3 bis 12 g/m² auf der Bahnoberfläche vorhanden ist. Im allgemeinen können filmbildende Vinylidenharze verwendet werden, die im polymerisierten Molekül wenigstens 5 Gew.-%, vorzugsweise aber mindestens 80 Gew.-% Vinylidenchlorid enthalten. Als Comonomere seien genannt: Vinylchlorid, Vinylbromid, Vinylacetat, Vinylpropionat, Vinylchloracetat, Alkylacrylat oder Methacrylat, wie beispielsweise Methyl-, Äthyl-, Propyl-, Butyl-, Isobutyl-, Methoxyäthyl- oder Chloräthylacrylat oder -methacrylat, Methylvinylketon, Methylisopropenylketon, Acrylnitril, Methacrylnitril, Styrol, Vinylnaphthalin, Äthylvinyläther, Butylvinyläther, N-Vinylphthalimid, N-Vinylsuccinimid, N-Vinylcarbazol, Methylen-diäthylmalonat, ungesättigte organische Säuren, wie Itaconsäure, oder Mischungen von diesen Verbindungen. Das Copolymerisat kann neben Vinylidenchlorid eines bis drei dieser Monomeren enthalten. Ein geeignetes Copolymerisat besteht beispielsweise aus 90 bis 92 Gew.-% Vinylidenchlorid, 5,5 bis 7 Gew.-% Acrylnitril, 1,5 bis 3,5 Gew.-% Methacrylsäuremethylester und 0,5 bis 1,5 Gew.-% Itaconsäure. Eine 0,1gew.-%ige Lösung dieses Copolymerisats in einem Gemisch aus Tetrahydrofuran und Toluol im Volumenverhältnis 7 : 3 hat eine relative Viskosität von 1,04 (23°C), eine 3gew.-%ige Lösung eine relative Viskosität von 2,8 (23°C) (DE-A-2 832 926). Weitere bevorzugte Copolymerisate sind in den US-A-4 192 904 und US-A-4 233 341 beschrieben.

Das Vinylidenharz kann übliche Wachse, z. B. auf Basis von veresterten Montansäuren, Polyolefinwachse oder auf Basis von Oxazolin, und/oder übliche Füllstoffe, beispielsweise Kaolin, insbesondere hydrophobiertes Kaolin, Kieselsäure oder Calciumcarbonat (Kreide) mit einer bevorzugten mittleren Korngröße von 1 bis 3 µm enthalten.

Das Vinylidenharz oder eine Mischung des Vinylidenharzes wird mit oder ohne anderen Harzen und mit Weichmachern, wie z. B. Ester der Phthalsäure wie Dibutylphthalat, Ester der Citronensäure, wie Acetyltributylcitrat, der Sebacinsäure oder Weinsäure, wie Diisobutyltartrat, verwendet. Vorzugsweise ist das Harz jedoch weichmacherfrei.

Das Vinylidenharz wird mit einem hierzu üblichen Verankerungsmittel, z. B. mit einem der obengenannten gehärteten, kationischen hitzehärtbaren Harze als Verankerungsmittel, oder direkt auf die Trägerbahn in Form wäßriger oder nichtwäßriger Mischungen wie Dispersionen, Emulsionen, in Form einer Latex, in Form von Lösungen in Wasser oder organischen Lösungsmitteln oder in Form von Schmelzen aufgebracht. Bevorzugt wird eine 15- bis 30gew.-%ige Lösung in organischem Lösungsmittel mit einer Auftragsdicke von 3 bis 50 insbesondere 3 bis 12 µm. Die Trägerbahn aus regenerierter Cellulose kann sich hierbei in getrocknetem, wieder angefeuchtetem oder noch nicht getrocknetem gelartigem Zustand befinden. Nach dem Auftragen wird das Dispergier- bzw. Lösungsmittel entfernt, z. B. durch Erhitzung mit Heißluft und/oder Infrarotheizung. Die Bahn wird gewöhnlich bis zu einem Feuchtigkeitsgehalt von weniger als 15 Gew.-%, vorzugsweise 5 bis 10 Gew.-%, getrocknet. Eine weitere Sinterung des Überzugs bei erhöhter Temperatur ist nur erforderlich, wenn eine besonders starke Haftung des Überzugs auf dem Träger gewünscht wird. Im allgemeinen ist eine Überzugsdicke im Bereich von etwa 0,05 bis 0,5 mm ausreichend.

Zur Verpackung von Fleischwaren in Form von Wurstmasse werden bekanntlich geraffte, nahtlose Schlauchhüllen verwendet, die beim Einpressen der Wurstmasse fortlaufend entfältelt werden. Diese gerafften Hüllen, in der Fachsprache auch als Raupen oder Hohlstäbe bezeichnet, werden bisher aus langen, nahtlosen Schläuchen hergestellt, die man in Richtung ihrer Längsachse fördert und gegen eine Gegenkraft rafft, wobei die Länge der gerafften Hülle gewöhnlich nur noch 1 bis 3% der Ursprungslänge beträgt.

Auch die erfindungsgemäße Schlauchhülle kann gerafft werden.

Dies ist besonders überraschend, da wegen der Verdickung im Bereich der Versiegelung infolge des beide Ränder überdeckenden Folienstreifens eigentlich Schwierigkeiten beim Raffen zu erwarten sind. Die Schlauchhülle wird beispielsweise mit dem aus den US-A-3 988 804 und US-A-4 185 358 bekannten Verfahren bzw. der dort beschriebenen Vorrichtung gerafft.

Ein Raffverhältnis von 1 : 70 bis 1 : 80 läßt sich ohne weiteres erreichen.

Es ist auch eine spiralförmige Verdrehung der Hülle und folglich eine Verdrillung der relativ dikken Nahtzone um die Längsachse der Hülle beim Raffvorgang möglich, aber nicht erforderlich. Dies geschieht beispielsweise mit an sich bekannten Raffvorrichtungen, wie sie z. B. in den US-A-2 819 488, US-A-3 619 854, US-A-3 594 857 und US-A- 3 766 603 beschrieben sind. Die Anzahl der Windungen pro 10 m Schlauchlänge liegt zweckmäßigerweise zwischen 0,5 und 10 und wird je nach Ausmaß der Verdickung in der Nahtzone und der Breite des Folienstreifens gewählt.

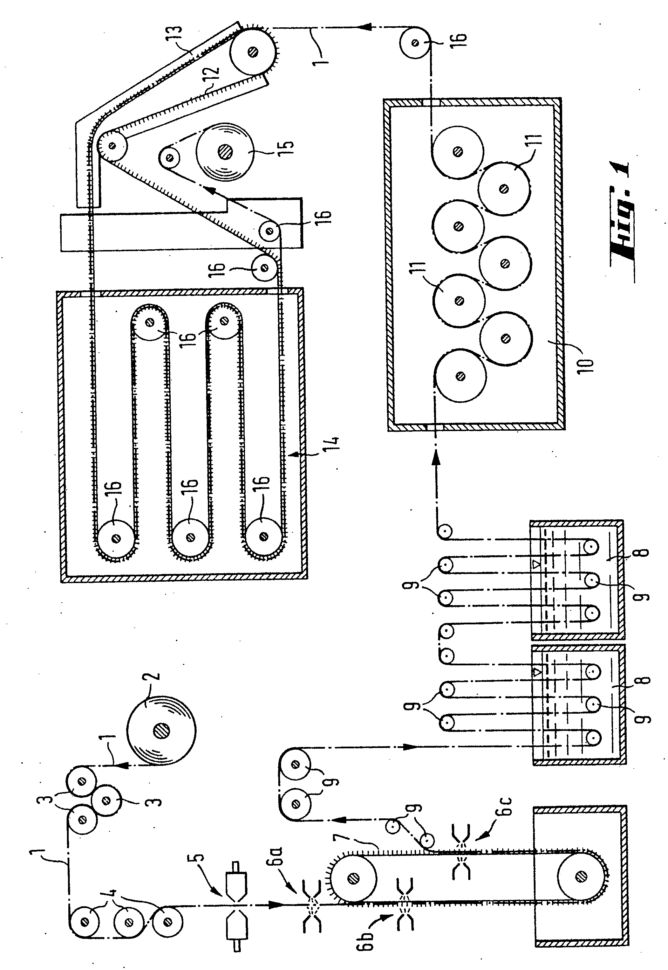

Die Erfindung wird anhand der Figuren 1 bis 7 und dem folgenden Beispiel näher erläutert.

Fig. 1 zeigt die Herstellung der faserverstärkten Bahn aus regenerierter Cellulose,

Fig. 2 zeigt die Beschichtung der faserverstärkten Bahn aus regenerierter Cellulose mit gasundurchlässiger, siegelfähiger Schicht,

Fig. 3, 4 und 7 zeigen Alternativen zur Herstellung eines Schlauches aus der Bahn,

Fig. 5 zeigt den Siegelbereich des Schlauches queraxial im Schnitt.

Fig. 6 zeigt die gefüllte Schlauchhülle.

### Beispiel

Eine Bahn 1 aus langfaserigem Hanfpapier mit einer Flachbreite von 235 mm und einem Flächengewicht von 21 g/m²·wird von einer Rolle 2 abgewickelt und nach dem Durchlaufen von Zugwalzen 3 und die Bahnkanten steuernden Walzen 4 mit einem Flachbahngießer 5 beidseitig mit Viskose beschichtet. Die Spaltbreite beträgt beispielsweise 0,8 mm, die Bahngeschwindigkeit 5 m/min.

Die Bahn 1 passiert danach zur Fällung und Regenerierung Sprühdüsen 6a, 6b und 6c, aus denen Regenerierflüssigkeit auf die mit Viskose versehenen Bahn aufgebracht wird. Die aus dem ersten Düsenpaar 6a austretende Regenerierflüssigkeit besteht beispielsweise aus 30 g/l Schwefelsäure, 260 g/l Ammoniumsulfat und 100 g/l Natriumsulfat und hat eine leicht erhöhte Temperatur von etwa 35 bis 50°C. Der Anteil der Schwefelsäure wird gewöhnlich in den folgenden Düsen 6b und 6c erhöht. Die Bahnbreite wird durch die an den beiden Bahnkanten angreifenden Nadelketten 7 konstant gehalten, so daß die gewöhnlich beim Regenerieren auftretende Schrumpfung in Querrichtung verhindert wird. Die faserverstärkte Bahn aus Cellulosehydrat-Gel durchläuft anschließend die schematisch dargestellten Wasch-, Entschwefelungs- und Weichmachungsbäder 8, wobei sie über Walzen 9 geführt wird. Die Bahn aus Cellulosehydrat-Gel hat nun eine Breite von 210 mm. Eine Vortrocknung der Bahn erfolgt im Trockenteil 10, in dem die Bahn über Trocknungswalzen 11 läuft. Der Wassergehalt der Bahn ist beim Verlassen dieser Trockenstufe 80 bis 150 Gew.-%. Danach werden die Bahnkanten von Nadelkluppenketten 12 erfaßt und die Bahn durch einen Spannrahmen 13 und anschließend durch mehrere Etagen eines Trockenfeldes 14 geführt. Im Spannrahmen 13 wird die Bahn auf eine Breite von 252 bis 262 mm in Querrichtung verdehnt und danach — während sie weiterhin auf diese Breite gehalten wird — getrocknet, vorzugsweise bei etwa 80°C. Die Restfeuchte der auf der Walze 15 aufgewickelten Bahn beträgt etwa 14 Gew.-%, sie zeigt eine Reißfestigkeit in Längsrichtung von 52 N/mm$^2$, in Querrichtung 58 N/mm$^2$ und eine Reißdehnung von etwa 17,5% in beiden Richtungen. Mit 16 sind weitere meist zur Umlenkung der Bahn und/oder der Kluppenketten dienende Walzen bezeichnet.

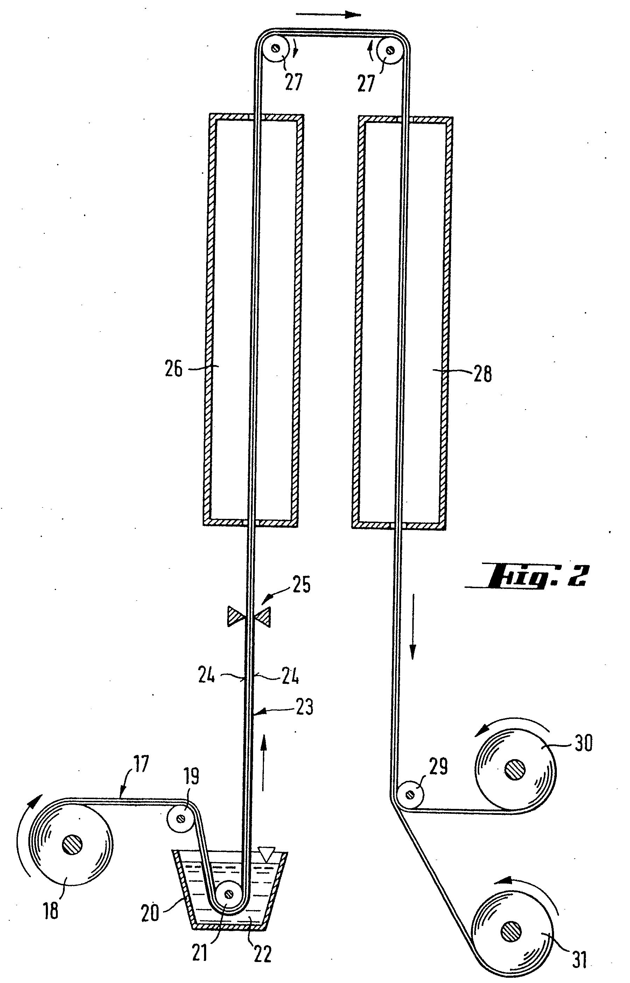

Das Aufbringen der Beschichtung auf die Bahn, sei es die Verankerungsschicht oder die gasundurchlässige siegelfähige Beschichtung, wird in der Fig. 2 beispielhaft erläutert.

Die von einer Vorratsrolle 18 abgewickelte, doppellagige Bahn 17 wird nach Durchlaufen der Umlenkwalze 19 mit stetiger Geschwindigkeit durch eine Wanne 20 über eine in der Wanne befindliche Umlenkwalze 21 geführt. Mit 22 ist die Beschichtungsflüssigkeit in der Wanne 20 bezeichnet. Die Flüssigkeit besteht z. B. aus 400 Gewichtsteilen eines Gemisches von Tetrahydrofuran/Toluol (Volumenverhältnis 7 : 3), in dem 100 Gewichtsteile eines Copolymerisats mit Einheiten aus Vinylidenchlorid (91 Gew.-%), Acrylnitril (6,2 Gew.-%), Methacrylsäuremethylester (2,1 Gew.-%) und Itaconsäure (0,7 Gew.-%) gelöst sind. Außerdem enthält die Lösung zweckmäßigerweise Wachs und Kaolin. Die auf den Außenseiten die flüssige Beschichtung 24 aufweisende, doppellagige Bahn 23 durchläuft in vertikaler Richtung von unten nach oben den vom Rakel 25 oder von sogenannten Doctor-Walzen gebildeten Spalt, der eine bestimmte Dicke der Beschichtung auf den Oberflächen der Bahn einstellt. Die Bahn wird danach durch den Trockenschacht 26 geführt, in dem die flüssigen Anteile der Beschichtung durch Wärmeeinwirkung, z. B. Heißluft von ca. 115°C, verdampft werden und sich ein geschlossener Filmüberzug mit einem Flächengewicht von beispielsweise 10 g/m$^2$ bildet. Nach den Umlenkwalzen 27 folgt ein zweiter Trockenschacht 28, der auch zur Rekonditionierung der Bahn, z. B. zum Wiederbefeuchten bis zu einem Wassergehalt von 8 bis 10 Gew.-%, benutzt werden kann. Hierzu wird mit Wasserdampf gesättigte Luft von 80 bis 98°C verwendet. Bei der Umlenkwalze 29 erfolgt die Trennung der beiden Lagen, welche auf den Vorratsrollen 30 und 31 aufgewickelt werden.

Anstelle der in der Fig. 2 gezeigten Beschichtung einer doppellagigen Bahn ist auch die einseitige Beschichtung mit üblichen Beschichtungsvorrichtungen möglich.

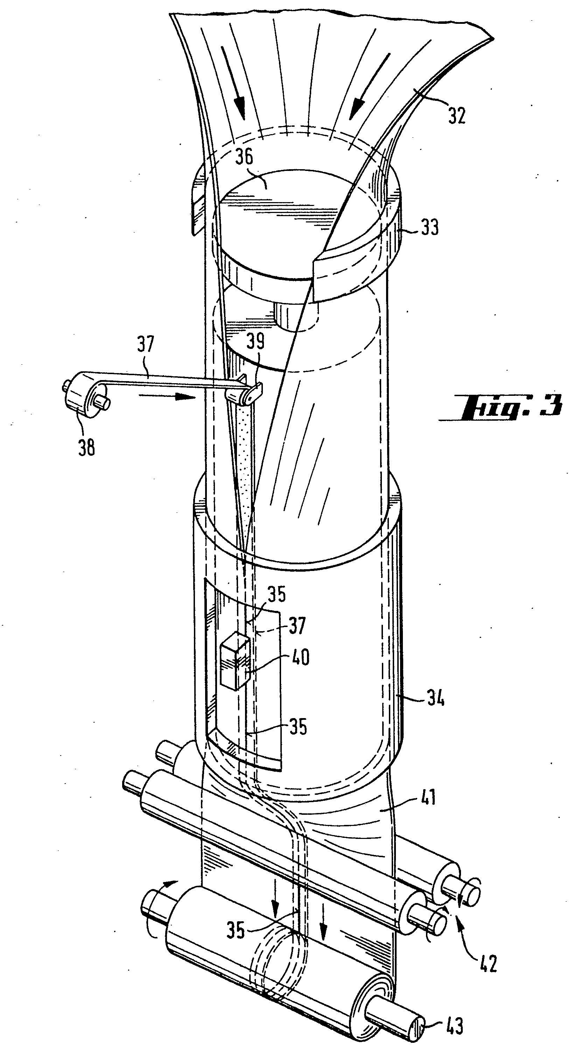

Aus der mit einer gasundurchlässigen und siegelfähigen Schicht versehenen Bahn wird nun ein Schlauch geformt, wie es beispielsweise in Fig. 3, 4 oder 7 dargestellt ist.

In der Fig. 3 wird eine faserverstärkte Bahn 32 aus regenerierter Cellulose durch ein Ringsegment 33 geführt und zu einem Schlauch geformt, wobei sich die beiden Ränder in der Führungshülse 34 zu einer Stoßnaht 35 nähern. Das Ringsegment 33 und die Führungshülse 34 dienen zur äußeren Unterstützung der Schlauchbildung, während das im Schlauchinneren vorhandene zylindrische Stützelement 36 den Schlauch von Innen abstützt. Ein Folienstreifen 37, bestehend aus dem gleichen faserverstärkten Material wie die Bahn, wird von der Rolle 38 abgewickelt und über eine ösenförmige Halterung 39 in das Innere des Schlauches geführt, wobei sich die Stoßnaht 35 in der Mitte des Folienstreifens 37 befindet.

Die geheizte Siegelbacke 40, die z. B. auch die Form einer anpreßbaren geheizten Walze aufweisen kann, siegelt nun den Folienstreifen 37 gegen die Randzonen der zu einem Schlauch geformten Bahn. Die gasundurchlässige und siegelfähige Schicht befindet sich auf der die Innenseite des Schlauches bildenden Bahnoberfläche. Der Folienstreifen 37 ist beidseitig mit dem gasundurchlässigen und siegelfähigen Material beschichtet. Der Schlauch 41 wird durch das Walzenpaar 42 abgezogen und mit der Rolle 43 aufgewickelt.

Anstelle des Stützelements 36 im Inneren des gebildeten Schlauches kann sich auch Füllgut z. B. Wurstbrät in dem Schlauch befinden, das aus einem Füllrohr einer Füllvorrichtung in dem Maße austritt wie der Schlauch fortbewegt wird. Vorzugsweise mündet das Füllrohr koaxial in das Schlauchinnere ein. Ferner ist es auch möglich, das Stützelement 36 als Füllrohr auszubilden. In diesen Fällen erfolgt die Schlauchbildung in einem Arbeitsgang mit der Herstellung der Würste.

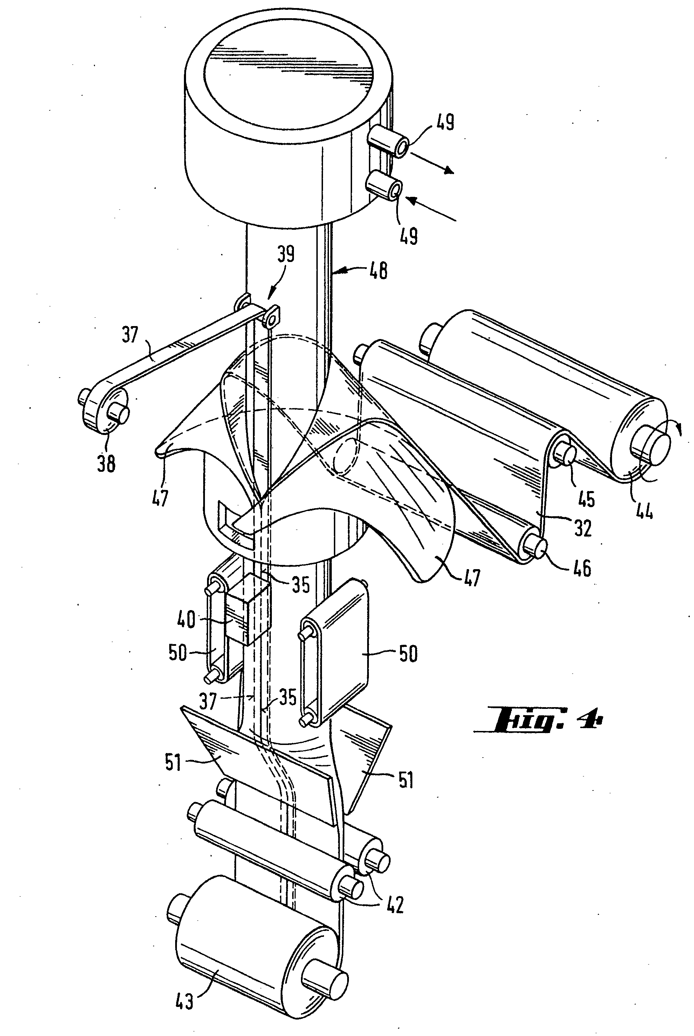

In einer in Fig. 4 gezeigten Alternative wird die faserverstärkte Bahn 32 aus regenerierter Cellulose von der Rolle 44 abgezogen und über Leitrollen 45 und 46 zu einer Formschulter 47 geführt, wo die Schlauchformung stattfindet. Die beiden Ränder der Bahn 32 werden unter Bildung einer Stoßnaht 35 einander genäähert. Das zylindrische Stützelement 48 befindet sich im Inneren des Schlauches und ist durch die Öffnungen 49 mit einem Kühlmittel beaufschlagbar. Es zeigt einen Außendurchmesser, der dem Innendurchmesser des gebildeten Schlauches entspricht. Ein Folienstreifen 37, abgewickelt von der Rolle 38, wird über ein ösenförmiges Führungselement 39 in das Innere des Schlauches geführt, wobei sich die Stoßnaht 35 in der Mitte des Folienstreifens 37 befindet.

Die auf 130°C geheizte Siegelbacke 40 mit einer Länge von beispielsweise 200 mm wird mit 2 bar taktweise aufgepreßt, wobei der Folienstreifen 37 gegen die Randzonen der zu einem Schlauch geformten Bahn gesiegelt wird. Die gasundurchlässige und siegelfähige Schicht befindet sich auf der die Innenseite des Schlauchs bildenden Bahnoberfläche. Der Folienstreifen ist beidseitig mit einer gasundurchlässigen und siegelfähigen Oberflächenschicht versehen und besteht aus faserverstärkter regenerierter Cellulose mit den erfindungsgemäßen Werten für die Reißfestigkeit und Reißdehnung. Er hat beispielsweise eine Breite von 10 mm, so daß die Randzonen der Bahn jeweils um etwa 5 mm überdeckt werden.

An der äußeren Oberfläche des Schlauches schieben Transportbänder 50 den Schlauch taktweise um z. B. jeweils 150 mm in vertikaler Richtung nach unten. Der Schlauch passiert Bleche 51, die den Schlauch flachlegen, sowie ein Transportwalzenpaar 42 und wird dann auf der Rolle 43 aufgewickelt.

Ein Abschnitt des Schlauches wird mit einer üblichen Wurstabfüllvorrichtung mit einem Wurstbrät für Brühwürste bei einem Fülldruck von 0,3 bar gefüllt und verschlossen. Danach wird die Wurst wie üblich in Wasser von 80 bis 82°C eine Stunde lang gebrüht, danach gekühlt und im Kühlraum gelagert.

Eine Dimensionsänderung der Wurst ist weder vor noch nach dem Brühprozeß zu beobachten. Sie zeigte stets pralles Aussehen und behält ihren gleichmäßigen Durchmesser bei. Der Gewichtsverlust nach einwöchiger Lagerung im Kühlraum ist kleiner als 1%. Nach dem Anschneiden der Wursthülle kann sie mühelos durch längsaxiales Ziehen am eingesiegelten Folienstreifen geöffnet und abgezogen werden.

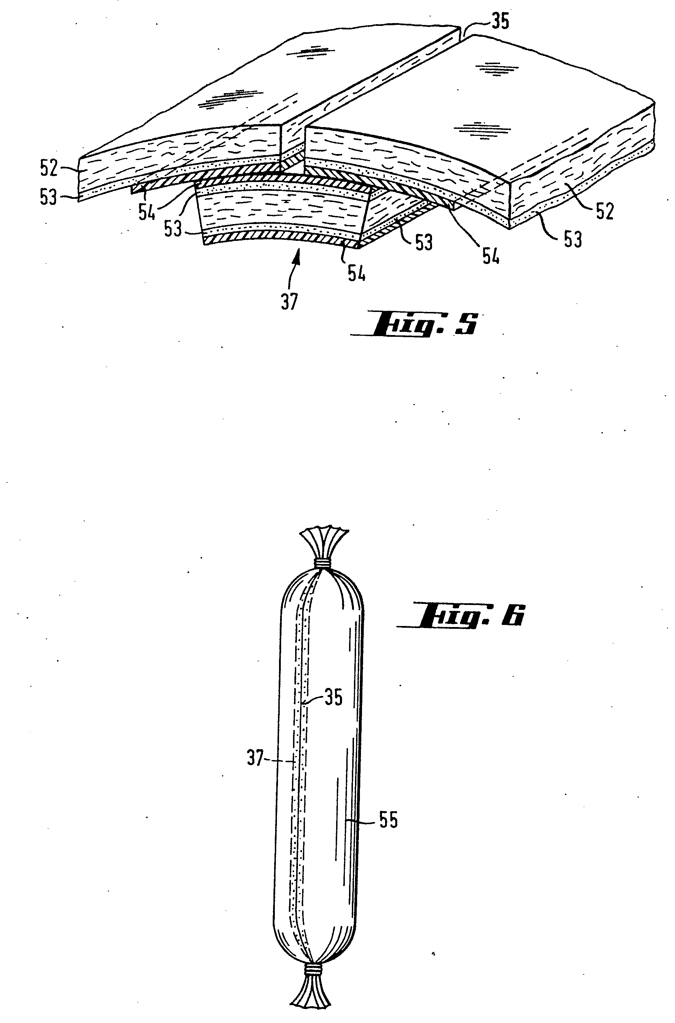

Fig. 5 zeigt den Siegelbereich des Schlauches im Schnitt, wobei mit 52 das faserverstärkte Schlauchmaterial aus regenerierter Cellulose, mit 53 die Verankerungsschicht, 54 die gasundurchlässige und siegelfähige Schicht auf den Randzonen und mit 37 der Folienstreifen bezeichnet ist. Der in und durch den Schlauch 52 hindurchgedrungene Anteil des die Verankerungsschicht 53 bildenden Materials ist nur gering und nicht dargestellt.

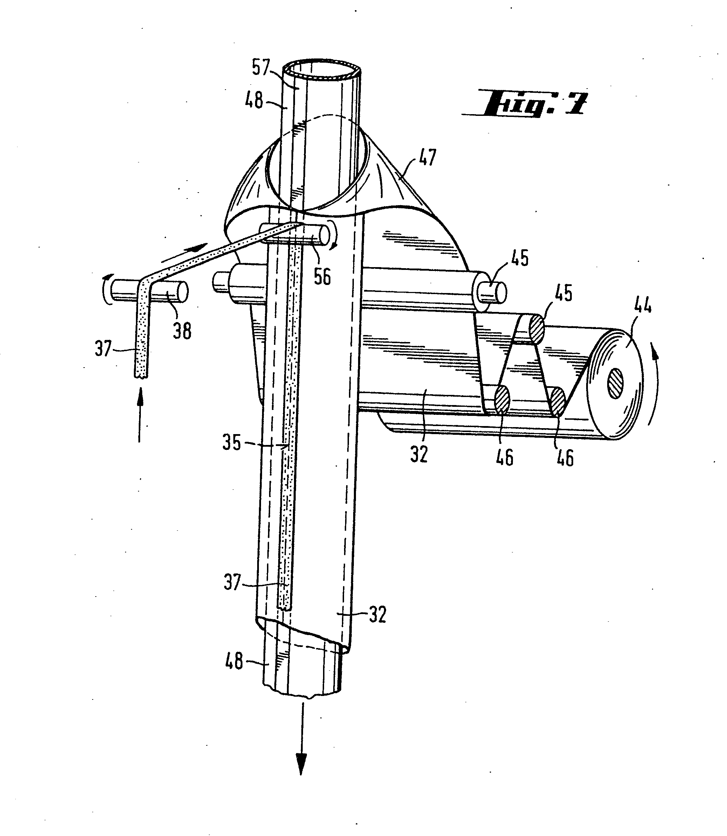

In Fig. 6 ist die gefüllte Schlauchhülle 55 mit innenliegendem eingesiegeltem Folienstreifen 37 dargestellt, der die Stoßnaht 35 im wesentlichen symmetrisch überdeckt.

In Fig. 7 wird der Schlauch analog zu der in Fig. 4 gezeigten Weise hergestellt. Die Bezugsziffern haben die gleiche Bedeutung. Der Folienstreifen wird in diesem Beispiel allerdings auf die Außenseite des Schlauchs aufgebracht, wozu eine geheizte Siegelwalze 56 verwendet wird. Zur besseren Kontaktierung der Walze 56 mit den zu versiegelnden Flächen ist das als Unterlage dienende rohrförmige Stützelement 48 im Siegelbereich mit einer Abflachung 57 versehen. Das Stützelement 48 kann auch als Füllrohr ausgebildet sein, durch welches das Füllgut in den gebildeten Schlauch eingepreßt wird.

Die Schlauchhülle der Erfindung besitzt eine feste Naht und ein festes Hüllenmaterial, so daß durch den beim Füllen auftretenden Druck und durch die beim Brühen und Abkühlen auftretenden Quell- und Schrumpfkräfte keine Schädigung eintritt. Die Hülle zeigt ferner eine gleichmäßige koagulierte und regenerierte Schicht aus Cellulose und eine einheitliche Beschichtung aus gasundurchlässigem Material. Sie ist insbesondere zur Verwendung als Wursthülle für Koch- und Brühwürste geeignet. Unter Kochwurst sind insbesondere Leberwurstsorten und Blutwurstsorten zu verstehen. Brühwürste sind beispielsweise Jagdwurst, Bierschinken, Fleischwurst, Gelbwurst und Mortadella.

## Patentansprüche

1. Aus blatt- oder bahnförmigem, rechteckigem Folienzuschnitt oder endloser Folienbahn (32) aus regenerierter Cellulose bestehende und um die Längsachse zu einem Schlauch (41) gebogene Hülle für Lebensmittel, insbesondere Wursthülle, deren längsaxial sich erstreckenden Randbereiche unter Verwendung eines Folienstreifens (37) mit siegelfähiger Oberfläche mit einer Naht (35) verbunden sind, dadurch gekennzeichnet, daß die längsaxial sich erstreckenden Ränder der aus faserverstärkter regenerierter Cellulose bestehenden Schlauchhülle aneinanderstoßen oder sich überlappen und mit dem die randnahe Bereiche überdeckenden Folienstreifen (37) auf der Innen- oder Außenseite der Schlauchhülle verbunden sind, wobei das aus faserverstärkter regenerierter Cellulose bestehende Bahnmaterial im nassen wiederangefeuchteten Zustand in Bahnlängsrichtung eine Reißfestigkeit von 15 bis 30 N/mm² und eine Reißdehnung von 30 bis 50% und in Bahnquerrichtung eine Reißfestigkeit von 15 bis 25 N/mm² und eine Reißdehnung von 30 bis 50% aufweist, wobei die Reißfestigkeit in Bahnquerrichtung gleich oder größer ist als die Reißfestigkeit in Bahnlängsrichtung, und daß die Schlauchhülle (41) auf ihrer dem Folienstreifen (37) zugewandten Oberfläche eine im wesentlichen gasundurchlässige und siegelfähige, vollflächig vorhandene Schicht (54) aufweist, und daß der Folienstreifen (37) zumindest auf der Oberfläche, welche mit der Schlauchhülle (41) in Kontakt tritt, eine Schicht (54) besitzt, welche ein gasundurchlässiges und siegelfähiges Material enthält, und daß das Trägermaterial des Folienstreifens aus faserverstärkter, regenerierter Cellulose besteht, welche die gleichen Werte bezüglich der Reißfestigkeit und Reißdehnung besitzt wie das Bahnmaterial.

2. Schlauchhülle nach Anspruch 1, dadurch gekennzeichnet, daß die gasundurchlässige und siegelfähige Schicht (54) aus einem thermoplastischen Polymerisat oder Copolymerisat besteht, das zu mindestens 5 Gew.-%, insbesondere mindestens 80 Gew.-% Vinylidenchlorid-Einheiten enthält.

3. Schlauchhülle nach Anspruch 2, dadurch gekennzeichnet, daß das Vinylidenchlorid enthaltende Polymerisat oder Copolymerisat mit einem gehärteten kationischen hitzehärtbaren Harz, insbesondere mit einem Harnstoff-Formaldehyd-, Melamin-Formaldehyd- oder Phenol-Formaldehyd-Harz oder mit einem kondensationsprodukt von Polyamidpolyamin, aliphatischem Polyamin oder Polyamid mit bifunktionellen Halohydrinen oder deren Derivaten, wie Epichlorhydrin, auf der Hüllenoberfläche verankert ist.

4. Schlauchhülle nach einem der Ansprüche 1 bis 3, dadurch gekennzeichnet, daß der Folienstreifen (37) beidseitig eine gasundurchlässige und siegelfähige Oberflächenschicht (54) aufweist.

5. Schlauchhülle nach einem der Ansprüche 1 bis 4, dadurch gekennzeichnet, daß sie gerafft ist, insbesondere in einem Raffverhältnis von 1 : 70 oder kleiner.

6. Schlauchhülle nach einem der Ansprüche 1 bis 5, dadurch gekennzeichnet, daß das Bahnmaterial in nassem Zustand eine Reißfestigkeit in Längsrichtung von 20 bis 30 N/mm² und in Querrichtung von 25 bis 35 N/mm² aufweist, wobei die Reißfestigkeit in Querrichtung größer ist als in Längsrichtung.

7. Schlauchhülle nach einem der Ansprüche 1 bis 6, dadurch gekennzeichnet, daß das Bahnmaterial in nassem Zustand eine Reißdehnung in Längsrichtung und in Querrichtung von 30 bis 40% zeigt.

8. Schlauchhülle nach einem der Ansprüche 1 bis 7, dadurch gekennzeichnet, daß das Bahnmaterial in trockenem Zustand bei einer Restfeuchte von 8 bis 10 Gew.-% und mit einem Gehalt von 20 bis 24 Gew.-% Glycerin eine Reißfestigkeit in Längsrichtung von 50 bis 70, insbesondere 55 bis 65 N/mm², und in Querrichtung von 50 bis 75, insbesondere 65 bis 75 N/mm² besitzt, wobei die Reißfestigkeit in Querrichtung gleich, vorzugsweise größer ist als in Längsrichtung.

9. Schlauchhülle nach einem der Ansprüche 1 bis 8, dadurch gekennzeichnet, daß das Bahnmaterial im trockenen Zustand bei einer Restfeuchte von 8 bis 10 Gew.-% und mit einem Gehalt von 20 bis 24 Gew.-% Glycerin eine Reißdehnung von 8 bis 19, insbesondere 8 bis 12% zeigt.

10. Verfahren zur Herstellung einer Schlauchhülle aus einer Bahn, wobei man eine Faserbahn mit Viskose beschichtet, die Viskose koaguliert, zu Cellulosehydrat-Gel regeneriert, durch Waschen von Säuren und Salzen befreit und trocknet, danach die faserverstärkte Bahn aus regenerierter Cellulose zu einem Schlauch formt und die längsaxial sich erstreckenden Ränder mit einem Folienstreifen verbindet, dadurch gekennzeichnet, daß man die Faserbahn zumindest während des Koagulierens der Viskose und/oder der Regenerierung zu Cellulosehydrat-Gel an den Rändern festhält, so daß ein Schrumpfen der Bahn verhindert wird, und die Bahn während des Trocknens um 5 bis 15% in Querrichtung dehnt, bezogen auf die Breite der Faserbahn vor der Beschichtung mit Viskose.

11. Verfahren nach Anspruch 10, dadurch gekennzeichnet, daß man die Bahn aus Cellulosehydrat-Gel oder die faserverstärkte Bahn aus regenerierter Cellulose mit einer gasundurchlässigen und siegelfähigen Oberflächenschicht versieht, gegebenenfalls gleichzeitig mit oder nach dem Aufbringen einer Verankerungsschicht auf die Bahn, und die Bahn dann in der Weise zu einem Schlauch formt, daß die längsaxial sich erstreckenden Ränder aneinanderstoßen oder überlappen, und den vorgeformten Schlauch auf seiner siegelfähigen Oberfläche mit einem Folienstreifen mit einer gasundurchlässigen siegelfähigen Oberflächenschicht versiegelt, wobei der Folienstreifen beide Ränder überdeckt.

12. Verfahren nach Anspruch 10 oder 11, dadurch gekennzeichnet, daß man die Schlauchhülle rafft.

13. Verfahren nach einem der Ansprüche 10 bis 12, dadurch gekennzeichnet, daß man in den Schlauch während oder nach dem Versiegeln des Folienstreifens mit den Bahnrändern Füllgut, insbesondere Wurstbrät, einfüllt.

14. Verwendung der Schlauchhülle nach einem der Ansprüche 1 bis 9, vorzugsweise hergestellt mit dem Verfahren nach einem der Ansprüche 10 bis 13, als Wursthülle für Koch- und Brühwürste.

**Claims**

1. A casing for foodstuffs, in particular a sausage casing, comprising a sheet-like or web-like, rectangular piece of film or a continuous web of film (32), which is composed of regenerated cellulose and curved around the longitudinal axis to form a tube (41) and the edge regions of which, running parallel to the longitudinal axis, are bonded by a seam (35), formed using a film strip (37) with a sealable surface wherein the longitudinally running edges of the tubular casing composed of fiber-reinforced regenerated cellulose meet or overlap and are bonded, on the inside or outside of the tubular casing, by means of film strip (37) which covers the regions close to the edges, the web material composed of fiber-reinforced regenerated cellulose having, in the wet remoistened state, in the longitudinal direction of the web, a breaking strength of 15 to 30 N/mm² and an elongation at break of 30 to 50% and, in the transverse direction of the web, a breaking strength of 15 to 35 N/mm² and an elogation at break of 30 to 50% and, in the transverse direction of the web, a breaking strength of 15 to 35 N/mm² and an elongation at break of 30 to 50%, the breaking strength in the transverse direction of the web being equal to or greater than the breaking strength in the longitudinal direction of the web, and wherein the tubular casing (41) has, on its surface facing the film strip (37), a substantially gas-impermeable and sealable layer (54) which is present on the entire surface, and wherein the film strip (37) has, at least on the surface which comes into contact with the tubular casing (41), a layer (54) which contains a gasimpermeable and sealable material, and wherein the carrier material of the film strip is composed of fiberreinforced regenerated cellulose which has the same values as the web material with respect to the breaking strength an elongation at break.

2. A tubular casing as claimed in claim 1, wherein the gas-impermeable and sealable layer (54) is composed of a thermoplastic polymer or copolymer which contains at least 5% by weight, and in particular at least 80% by weight, of vinylidene chloride units.

3. A tubular casing as claimed in claim 2, wherein the polymer or copolymer containing vinylidene chloride is anchored to the surface of the casing by a cured cationic thermosetting resin, in particular by urea/formaldehyde resin, melamine/formaldehyde resin or phenyl/formaldehyde resin or by a condensation product of a polyamide-polyamine, aliphatic polyamine or polyamide with bifunctional halohydrins or derivatives thereof, such as epichlorohydrin.

4. A tubular casing as claimed in any of claims 1 to 3, wherein the film strip (37) has, on both sides, a gasimpermeable and sealable surface layer (54).

5. A tubular casing as claimed in any of claims 1 to 4, which is shirred, in particular in a shirring ratio of 1 : 70 or less.

6. A tubular casing as claimed in any of claims 1 to 5, wherein the web material has, in the wet state, a breaking strength of 20 to 30 N/mm² in the longitudinal direction and a breaking strength of 25 to 35 N/mm² in the transverse direction, the breaking strength being greater in the transverse direction than in the longitudinal direction.

7. A tubular casing as claimed in any of claims 1 to 6, wherein the web material, in the wet state has an elongation at break of 30 to 40% in the longitudinal and transverse directions.

8. A tubular casing as claimed in any of claims 1 to 7, wherein the web material, in the dry state at a residual moisture content of 8 to 10% by weight and with a content of 20 to 24% by weight of glycerol, has, in the longitudinal direction, a breaking strength of 50 to 70, in particular 55 to 65, N/mm² and, in the transverse direction, a breaking strength of 50 to 75, particularly 65 to 75 N/mm², the breaking strength in the transverse direction being equal to or preferably greater than that in the longitudinal direction.

9. A tubular casing as claimed in any of claims 1 to 8, wherein the web material, in the dry state at a residual moisture content of 8 to 10% by weight and with a content of 20 to 24% by weight of glycerol, has an elongation at break of 8 to 19 in particular 8 to 12%.

10. A process for the manufacture of a tubular casing from a web, in which a fiber web is coated with viscose, the viscose is coagulated and regenerated to give a cellulose hydrate gel, is freed from acids and salts by washing and is dried, the fiber-reinforced web of regenerated cellulose is then formed into a tube and the longitudinally running edges are bonded by means of a film strip, wherein the fiber web is held by the edges, at least during the coagulation of the viscose and/or the regeneration to give cellulose hydrate gel, so that shrinking of the web is prevented, and, during the drying, the web is stretched by 5 to 15% in the transverse direction, relative to the width of the fiber web before the coating with viscose.

11. A process as claimed in claim 10, wherein the web of cellulose hydrate gel or the fiber-reinforced web of regenerated cellulose is provided with a gas-impermeable and sealable surface layer, if appropriate simultaneously with or after the application of an anchoring layer to the web, and the web is then formed into the shape of a tube in such a way that the edges running parallel to the longitudinal axis meet or overlap, and the preformed tube is sealed on its sealable surface by means of a film strip provided with a gas-impermeable, sealable surface layer, the film strip covering both edges.

12. A process as claimed in claim 10 or 11, wherein the tubular casing is shirred.

13. A process as claimed in any of claims 10 to 12, wherein the tube is filled, during or after the sealing of the film strip to the edges of the web, with a filling, in particular sausage meat.

14. The use of the casing as claimed in any of claims 1 to 9 and preferably manufactured using the process as claimed in claims 10 to 13, as a sausage casing for boiling sausages and cooked sausages.

## Revendications

1. Enveloppe pour produit alimentaire, constituée d'une section de pellicule rectangulaire, en forme de feuille ou de bande, ou d'une feuille continue (32) en cellulose régénérée, et recourbée le long de son axe longitudinal pour former un boyau, en particulier enveloppe pour saucisses, dont les zones marginales s'étendant longitudinalement sont assemblées par un joint (35) au moyen d'une bande de pellicule (37) avec une surface scellable, laquelle enveloppe est caractérisée en ce que les bords, s'étendant longitudinalement, de l'enveloppe tubulaire constituée de cellulose régénérée renforcée avec des fibres sont réunis l'un contre l'autre ou se chevauchent et sont assemblés avec la bande (37) recouvrant les zones marginales sur la face interne ou externe de l'enveloppe tubulaire, le matériau de la feuille constitué de cellulose régénérée renforcée avec des fibres, à l'état humide par réhumidification, ayant dans la direction longitudinale une résistance à la rupture de 15 à 30 N/mm$^2$ et un allongement à la rupture de 30 à 50%, et dans la direction transversale une résistance à la rupture de 15 à 35 N/mm$^2$ et un allongement à la rupture de 30 à 50%, la résistance à la rupture dans la direction transversale de la feuille étant égale ou supérieure à la résistance à la rupture dans la direction longitudinale de la feuille; en ce que l'enveloppe tubulaire (41) présente sur sa surface adjacente à la bande (37) une couche (54) essentiellement étanche aux gaz et scellable que la recouvre totalement; en ce que la bande (37) possède au moins sur la surface en contact avec l'enveloppe tubulaire (41) une couche (54) qui contient un matériau étanche aux gaz et scellable, et en ce que le matériau de support de la bande de pellicule est constitué de cellulose régénérée, renforcée avec des fibres, que possède les mêmes valeurs de résistance à la rupture et d'allongement à la rupture que le matériau de la feuille.

2. Enveloppe tubulaire selon la revendication 1, caractérisée en ce que la couche étanche aux gaz et scellable (54) est constituée d'un polymère ou d'un copolymère thermoplastique, que contient au moins 5% en poids, en particulier au mons 80% en poids, d'unités de chlorure de vinylidène.

3. Enveloppe tubulaire selon la revendication 2, caractérisée en ce que le polymère ou copolymère contentant du chlorure de vinylidène est ancré sur la surface de l'enveloppe avec une résine cationique thermodurcissable, durcie, en particulier avec une résine urée-formaldéhyde, mélamine-formaldéhyde ou phénol-formaldéhyde ou avec un produit de condensation de polyamidepolyamine, polymaine aliphatique ou polyamide avec des halohydrines bifonctionnelles ou leurs dérivés, comme l'épichlorhydrine.

4. Enveloppe tubulaire selon l'une des revendications 1 à 3, caractérisée en ce que la bande (37) comporte sur les deux faces une couche (54) superficielle étanche aux gaz et scellable.

5. Enveloppe tubulaire selon l'une des revendications 1 à 4, caractérisée en ce qu'elle est repliée en accordéon sur elle-même, en particulier dans un rapport de repliage de 1 à 70 ou plus faible.

6. Enveloppe tubulaire selon l'une des revendications 1 à 5, caractérisée en ce que le matériau de la feuille a, à l'état humide, une résistance à la rupture dans la direction longitudinale de 20 à 30 N/mm$^2$ et dans la direction transversale de 25 à 35 N/mm$^2$, la résistance à la rupture dans la direction transversale étant supérieure à la résistance à la rupture dans la direction longitudinale.

7. Enveloppe tubulaire selon l'une des revendications 1 à 6, caractérisée en ce que le matériau de la feuille a, à l'état humide, un allongement à la rupture dans la direction longitudinale et dans la direction transversale de 30 à 40%.

8. Enveloppe tubulaire selon l'une des revendications 1 à 7, caractérisée en ce que le matériau de la feuille a, à l'état sec, avec une humidité résiduelle de 8 à 10% en poids et avec une teneur de 20 à 24% en poids de glycérine, une résistance à la rupture dans la direction longitudinale de 50 à 70, en particulier de 55 à 65 N/mm$^2$ et dans la direction transversale de 50 à 75, en particulier de 65 à 75 N/mm$^2$, le résistance à la rupture dans la direction transversale étant égale et de préférence supérieure à la résistance à la rupture dans la direction longitudinale.

9. Enveloppe tubulaire selon l'une des revendications 1 à 8, caractérisée en ce que le matériau de la feuille a, à l'état sec, avec une humidité résiduelle de 8 à 10% en poids et avec une teneur en glycérine de 20 à 24% en poids, un allongement à la rupture de 8 à 19, en particulier de 8 à 12%.

10. Procédé de production d'une enveloppe tubulaire à partir d'une feuille continue, dans lequel on recouvre une feuille de fibres avec de la viscose, on coagule la viscose, on régénère en gel d'hydrate de cellulose, on élimine les acides et les sels par lavage et on sèche, puis on met la feuille en cellulose régénérée, renforcée avec des fibres, sous la forme d'un boyau et on assemble les bords s'étendant longitudinalement avec une bande de pellicule, procédé caractérisé en ce que la feuille de fibres est maintenue sur les bords au moins pendant la coagulation de la viscose et/ou la régénération en gel d'hydrate de cellulose, pour faire en sorte d'éviter un retrait de la feuille, et la feuille est étirée pendant le séchage de 5 à 15% dans la direction transversale, par rapport à la largeur de la feuille de fibres avant le revêtement avec de la viscose.

11. Procédé selon la revendication 10, caractérisé en ce que la feuille en gel d'hydrate de cellulose ou la feuille en cellulose régénérée, renforcée avec des fibres, comporte une couche superficielle étanche aux gaz et scellable, appliquée éventuellement en même temps que, ou après, une couches d'ancrage sur la feuille, et la feuille est ensuite mise sous la forme d'un boyau de manière que les bords s'étendant longitudinalement se rejoignent l'un contre l'autre ou se chevauchent, et on scelle le boyau pré-formé, sur sa surface scellable, avec une bande de pellicule recouverte d'une couche superficielle étanche aux gaz et scellable, la bande de pellicule recouvrant les deux bords.

12. Procédé selon la revendication 10 ou 11, caractérisé en ce qu'on replie en accordéon l'enveloppe tubulaire sur elle-même.

13. Procédé selon l'une des revendications 10 à 12, caractérisé en ce que pendant ou après le scellage de la bande de pellicule; on remplit le boyau avec le produit de garnissage, en particulier de la chair à saucisse.

14. Utilisation de l'enveloppe tubulaire selon l'une des revendications 1 à 9, fabriquée de préférence par le procédé suivant l'une des revendications 10 à 13, comme enveloppe de saucisse pour saucisses cuites et fraîches.

Fig. 1

*Fig. 2*

0 054 162

*Fig. 3*

**Fig. 4**

**Fig. 5**

**Fig. 6**

Fig. 7